# EUROPEAN PATENT APPLICATION

(11) **EP 4 528 977 A1**
(43) Date of publication of application: **26.03.2025**
(21) Application number: 24201252.4
(22) Date of filing: 19.09.2024
(51) Int. Cl.: H02J 9/06

(54) **STATE SWITCHING METHOD FOR LINE-INTERACTIVE UNINTERRUPTIBLE POWER SUPPLY AND UNINTERRUPTIBLE POWER SUPPLY**

(30) Priority: 21.09.2023 CN 202311228488
(71) Applicant: Lian Zheng Electronic (Shenzhen) Co., Ltd., Shenzhen, Guangdong 518101 (CN)
(72) Inventor: ZENG, HUABING, SHENZHEN 518101 (CN); XU, HEYI, SHENZHEN 518101 (CN)
(74) Representative: Schwan Schorer & Partner mbB

(57) **Abstract**

The disclosure provides a state switching method for a line-interactive UPS and an UPS using the same. The state switching method includes: when the UPS needs to switch from a first mode to a second mode, operating a first switch to switch from the current first mode to a battery mode, and maintaining the connected state of a first voltage regulation circuit in the switching process; after entering the battery mode, turning off a second switch to cause the first voltage regulation circuit disconnected from the UPS, and then turning on a third switch to cause a second voltage regulation circuit connected to the UPS; and operating the first switch to cause the UPS switched from the battery mode to the second mode. The switches of the UPS can be disconnected in a case of low current or no current, which can avoid switch adhesion, improve the reliability of the UPS, and prolong the service life of the UPS.

## Description

### TECHNICAL FIELD

The disclosure belongs to the field of power supplies, and specifically relates to a state switching method for a line-interactive uninterruptible power supply and an uninterruptible power supply using the same.

### BACKGROUND

Uninterruptible power supplies (Uninterruptible Power Supply, UPSs) include energy storage apparatuses, and can provide continuous constant-voltage and constant-frequency alternating current power output for electrical devices even in the event of mains power failure. According to operation modes, the UPSs can be divided into three categories: backup, on-line, and line-interactive. When mains power is normal, the load of the line-interactive UPS is powered by improved mains power (namely, mains mode); when the mains power fails, the UPS is switched to a battery mode for inverter power supply (namely, battery mode); and when the mains power is low or high, a desired voltage is output after voltage regulation by a voltage regulation circuit inside the UPS, where the voltage regulation includes boosting and bucking.

In order to adapt to a relatively wide range of mains voltage input, when most existing line-interactive UPSs switch from a boost mode to a buck mode or from a buck mode to a boost mode, if a relay is directly turned off for circuit switching and high current passes through the relay in the voltage regulation circuit, adhesion may take place in the relay, impairing the service life of the UPS. Meanwhile, the relay is required to have a large current withstand value and its spring is required to have good bounce performance, which increases the production cost of the UPS.

### SUMMARY

To solve the above problems, the disclosure provides a state switching method for a line-interactive uninterruptible power supply and an uninterruptible power supply using the same, which can avoid switch adhesion, improve the reliability of the UPS, and prolong the service life of the UPS.

According to a first aspect, the disclosure provides a state switching method for a line-interactive UPS, the line-interactive UPS including: a mains input module configured to input a mains voltage, which includes a first voltage and a second voltage; an operation state module including a first switch, where the first switch is used for setting the operation state of the UPS as a mains mode or a battery mode, and the mains mode includes a first mode and a second mode; a voltage regulation module including a second switch, a third switch, a first voltage regulation circuit, and a second voltage regulation circuit, where the second switch is used for connecting the first voltage regulation circuit to the UPS, the third switch is used for connecting the second voltage regulation circuit to the UPS, the first voltage regulation circuit is used for regulating the first voltage to a desired voltage in the first mode, and the second voltage regulation circuit is used for regulating the second voltage to the desired voltage in the second mode; and an output module configured to output the desired voltage; the state switching method includes: when the UPS needs to switch from the first mode to the second mode, operating the first switch to switch from the current first mode to the battery mode, and maintaining the connected state of the first voltage regulation circuit in the switching process; after entering the battery mode, turning off the second switch to cause the first voltage regulation circuit disconnected from the UPS, and then turning on the third switch to cause the second voltage regulation circuit connected to the UPS; and operating the first switch to cause the UPS switched from the battery mode to the second mode.

Optionally, before operating the first switch to cause the UPS switched from the battery mode to the second mode, the method further includes: performing a phase lock operation on the UPS.

Optionally, the operating the first switch to cause the UPS switched from the battery mode to the second mode includes: determining whether the UPS has completed phase lock: if the phase lock has been completed, operating the first switch to cause the UPS switched from the battery mode to the second mode within 10 milliseconds; or if the phase lock has not been completed, continuing the phase lock operation.

Optionally, the first switch, the second switch, and the third switch are relays.

Optionally, the relays are electromagnetic relays.

Optionally, the first voltage regulation circuit is composed of a plurality of coils with different turns in an automatic voltage regulation transformer.

Optionally, the second voltage regulation circuit is composed of a plurality of coils with different turns in the automatic voltage regulation transformer.

According to a second aspect, the disclosure provides a line-interactive UPS, including: a mains input module configured to input a mains voltage, which includes a first voltage and a second voltage; an operation state module including a first switch, where the first switch is used for setting the operation state of the UPS as a mains mode or a battery mode, and the mains mode includes a first mode and a second mode; a voltage regulation module including a second switch, a third switch, a first voltage regulation circuit, and a second voltage regulation circuit, where the second switch is used for connecting the first voltage regulation circuit to the UPS, the third switch is used for connecting the second voltage regulation circuit to the UPS, the first voltage regulation circuit is used for regulating the first voltage to a desired voltage in the first mode, and the second voltage regulation circuit is used for regulating the second voltage to the desired voltage in the second mode; an output module configured to output the desired voltage; and a controller configured to implement the steps of the state switching method as described in the first aspect when executing a computer program.

Optionally, the UPS further includes a battery configured to provide the desired voltage for the output module in the battery mode.

According to a third aspect, the disclosure provides a storage medium storing computer executable instructions that, when loaded and executed by a processor, implement the steps of the method as described in the first aspect.

The disclosure has low requirements for switches (namely, relays) and can use ordinary switches, which can reduce the production cost of the UPS. The disclosure can achieve low current or no current disconnection of the switches in the UPS, avoid switch adhesion, improve the reliability of the UPS, and prolong the service life of the UPS.

### BRIEF DESCRIPTION OF THE DRAWINGS

FIG. 1 is a schematic diagram of a line-interactive UPS in the prior art.
FIG. 2 is a schematic diagram of a state switching method for a line-interactive UPS according to an embodiment of the disclosure;
FIG. 3 is a schematic diagram of a state switching method for a line-interactive UPS according to an embodiment of the disclosure;
FIG. 4 is a schematic diagram of state switching waveforms of the line-interactive UPS in the prior art;
FIG. 5 is a schematic diagram of state switching waveforms of the line-interactive UPS according to an embodiment of the disclosure;
FIG. 6 is a schematic diagram of a state switching apparatus for a line-interactive UPS according to an embodiment of the disclosure; and
FIG. 7 is a schematic diagram of a controller provided according to an embodiment of the disclosure.

### DETAILED DESCRIPTION

Specific embodiments of the disclosure will be described in detail below. It should be noted that these embodiments are only for illustrative purposes and are not intended to limit the disclosure. In the following description, a large number of specific details are elaborated to provide a thorough understanding of the disclosure. However, it is obvious to those skilled in the art that the disclosure is not necessarily implemented by these specific details. In other examples, to avoid confusion with the disclosure, well-known programs, materials, or methods are not specifically described.

A line-interactive UPS indicates that its inverter is connected in parallel between the mains power and a load to serve as a backup power supply, and the inverter acts as a charger to charge a battery. Based on the reversible operation mode of the inverter and its interaction with the mains power, the line-interactive UPS is also known as an interactive UPS.

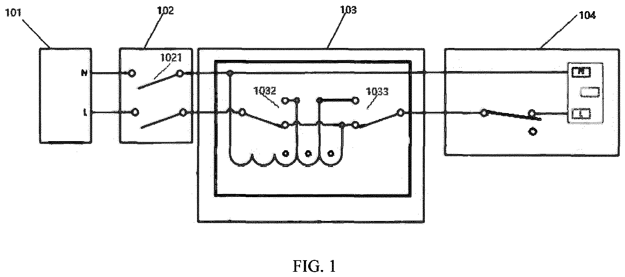

FIG. 1 is a schematic diagram of a line-interactive UPS. As shown in FIG. 1, the line-interactive UPS includes: a mains input module 101 configured to input a mains voltage, which includes a first voltage and a second voltage (the first voltage refers to the mains voltage higher than a desired voltage, and the second voltage refers to the mains voltage lower than the desired voltage; or the first voltage refers to the mains voltage lower than the desired voltage, and the second voltage refers to the mains voltage higher than the desired voltage); an operation state module 102, including a first switch used for setting the operation state of the UPS to a mains mode or a battery mode, where when mains power is normal, the UPS supplies power to a load in the mains mode (also known as a mains state), and when the mains power is abnormal, the UPS switches to the battery mode (also known as a battery state) and is powered by a battery through the inverter, and where the mains mode includes a first mode (also known as a first state) and a second mode (also known as a second state); a voltage regulation module 103, including a second switch 1032, a third switch 1033, a first voltage regulation circuit, and a second voltage regulation circuit, where the second switch is used for connecting the first voltage regulation circuit to the UPS, the third switch is used for connecting the second voltage regulation circuit to the UPS, the first voltage regulation circuit is used for regulating the first voltage to the desired voltage in the first mode, and the second voltage regulation circuit is used for regulating the second voltage to the desired voltage in the second mode, and where the voltage regulation module 103 regulates the mains voltage input thereto to the desired voltage by cooperation of a plurality of coils with different turns in an automatic voltage regulation (Automatic Voltage Regulation, A VR) transformer with the second switch 1032 and the third switch 1033; and an output module 104 configured to output the desired voltage. It should be noted that for clarity, FIG. 1 shows only some components or modules of the line-interactive UPS that are related to the concept of the disclosure. Because the content of the disclosure does not involve improvements on modules or circuits such as the inverter, battery, rectifier, and charger in the UPS, the modules or circuits and their operation principles will not be explained here, nor will they be shown in FIG. 1.

In the line-interactive UPS, the detection on abrupt anomalies of the mains voltage is usually slow and requires five cycles. When the UPS suddenly switches between a boost mode and a buck mode, in order to prevent the output voltage from exceeding specifications, the UPS is usually switched from the current mains mode to the battery mode and then from the battery mode to the mains mode with the corresponding voltage regulation circuit after half a cycle of anomaly detection. Specifically, excessively high mains voltage is taken as an example to explain the state switching process of the existing line-interactive UPS. Currently, the UPS needs to switch from the boost mode to the buck mode. In this process, when the first switch 1021 is operated to switch from the mains mode to the battery mode (before entering the battery mode), the second switch 1032 is turned off to cause the first voltage regulation circuit (referred to as a boost circuit here) disconnected from the UPS. After entering the battery mode, the third switch 1033 is turned on to cause the second voltage regulation circuit (referred to as a buck circuit here) connected to the UPS, and then the first switch is operated to switch back from the battery mode to the mains mode. In the mains mode at this time, the buck circuit is operated to buck the input excessively high mains voltage to the desired voltage.

The inventor found through research that in the above state switching process, the abnormal mains voltage happens suddenly, the timing for switching to the battery mode is random, and the mains voltage at this time cannot be accurately recognized to ensure the switching of a voltage stabilizing circuit at zero mains voltage, so the switching of the voltage stabilizing circuit may be implemented at high mains voltage, resulting in switching of the second switch 1032 when the load current is too high; and the force to turn on the second switch 1032 cannot overcome the spring force of the switch to turn off the second switch 1032, resulting in adhesion of the second switch 1032 to affect the service life of the UPS. Meanwhile, high requirements are put forward for the switches used in the UPS, for example, the switches are required to have a large current withstand value and springs are required to have good bounce performance, which will increase the production cost of the UPS.

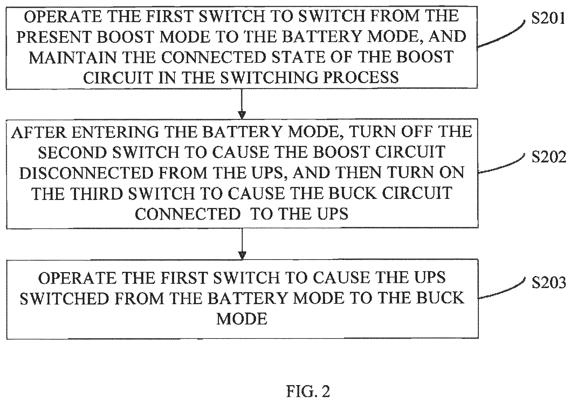

Based on the above problems, according to one aspect of the disclosure, a state switching method for a line-interactive UPS is provided. When the UPS needs to switch from the boost mode (also known as the boost state) to the buck mode (also known as the buck state), as shown in FIG. 2, the method includes: step S201: operating the first switch 1021 to switch from the current boost mode to the battery mode, and maintaining the connected state of the boost circuit in the switching process, and there is no current in the second switch 1032 at this moment, so no adhesion occurs when the second switch 1032 is released; step S202: after entering the battery mode, turning off the second switch 1032 to cause the boost circuit disconnected from the UPS, and then turning on the third switch 1033 to cause the buck circuit connected to the UPS; and step S203: operating the first switch 1021 to cause the UPS switched from the battery mode to the buck mode.

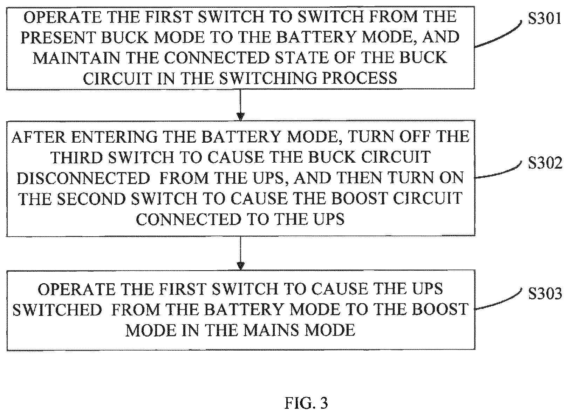

When the UPS needs to switch from the buck mode to boost mode, as shown in FIG. 3, the method includes: step S301: operating the first switch 1021 to switch from the current buck mode to the battery mode, and maintaining the connected state of the buck circuit in the switching process, and there is no current in the third switch 1033 at this moment, so no adhesion occurs when the third switch 1033 is released; step 302: after entering the battery mode, turning off the third switch 1033 to cause the buck circuit disconnected from the UPS, and then turning on the second switch 1032 to cause the boost circuit connected to the UPS; and step S303: operating the first switch 1021 to cause the UPS switched from the battery mode to the boost mode in the mains mode.

In some embodiments, in the line-interactive UPS, before switching from the battery mode to the mains inode, the voltage output by the battery is required to be at the same frequency, phase, and amplitude as the mains voltage, that is, the output of the battery must track changes in the mains voltage, which requires a phase lock technology. Phase lock involves an automatic control system that uses a phase difference between two signals to form a control signal through a conversion apparatus, so as to force the phases of the two signals to synchronize, called a phase-locked loop or loop. Because the embodiments of the disclosure do not involve improvements on the existing phase lock technology, the detailed content of the phase lock technology will not be explained here.

In some embodiments, operating the first switch 1021 to switch the UPS from the battery mode back to the mains mode includes: determining whether the UPS has completed phase lock: if the phase lock has been completed, operating the first switch 1021 to cause the UPS switched from the battery mode to the mains mode within a millisecond-level time; or if the phase lock has not been completed, continuing the phase lock operation. The millisecond-level time usually refers to within 10 milliseconds, such as 8 milliseconds, 5 milliseconds, 3 milliseconds, or 1 millisecond.

In some embodiments, the first switch, the second switch, and the third switch are relays. In some embodiments, the relays are electromagnetic relays.

In some embodiments, the automatic voltage regulation transformer includes a plurality of coils with different turns, and different turns of coils are selected according to the requirements to form the boost circuit and the buck circuit; in the boost circuit, the number of turns of the output coil is greater than that of the input coil; and in the buck circuit, the number of turns of the output coil is less than that of the input coil.

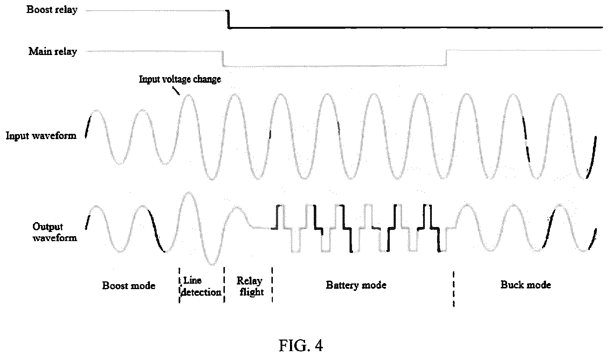

FIG. 4 shows relays and input/output waveforms in the state switching process of a line-interactive UPS in the prior art after mains voltage suddenly changes to over-voltage. It can be seen that after the input waveform undergoes a sudden change in mains power, the output waveform also undergoes a corresponding sudden change. In this case, both the main relay (namely, the first switch 1021) and the boost relay (namely, the second switch 1032) are turned off. After the waveforms of the main relay and the boost relay drop from high level to low level, the UPS enters a battery mode and is powered by the battery. The off state of the boost relay is maintained, the buck relay (namely, the third switch 1033) is turned on, the main relay is turned on to switch the waveform of the main relay from low level to high level, and the UPS switches back from the battery mode to the mains mode, that is, enters the buck mode after regulation to stabilize the output waveform and output the desired voltage waveform again. Such state switching method is prone to relay adhesion, which may affect the service life of the UPS and even leads to unsuccessful state switching, so that the reliability of the UPS is reduced.

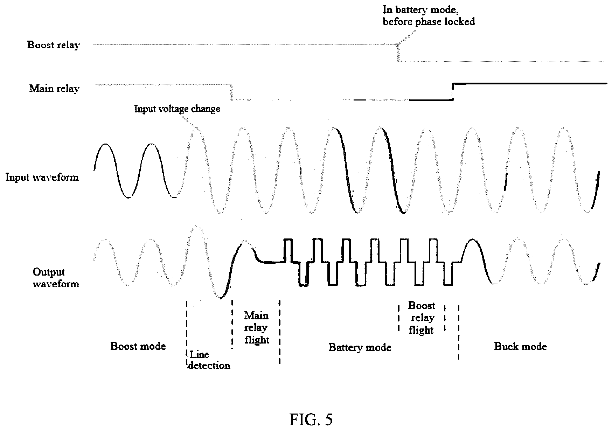

FIG. 5 shows relays and input/output waveforms in the state switching process of a line-interactive UPS in the embodiments of the disclosure after mains voltage suddenly changes to over-voltage. It can be seen that after the input waveform undergoes a sudden change in mains power, the output waveform also undergoes a corresponding sudden change. At this time, the main relay (namely, the first switch 1021) is first disconnected. After the main relay drops from high level to low level, the UPS enters a battery mode. In this process, the boost relay (namely, the second switch 1032) remains in an on state, that is, the waveform of the boost relay remains stable at high level. After entering the battery mode and before performing a phase lock operation, the boost relay is turned off, the waveform of the boost relay changes from high level to low level, the buck relay (namely, the third switch 1033) is turned on, the main relay is turned on to switch the waveform of the main relay from low level to high level, and the UPS switches back from the battery mode to the mains mode, that is, enters the buck mode after regulation to stabilize the output waveform and output the desired voltage waveform again. The method in the embodiments of the disclosure can achieve low current or no current disconnection of relays in a UPS voltage stabilization module, which can avoid adhesion of the relays, improve the reliability of the UPS, and prolong the service life of the UPS.

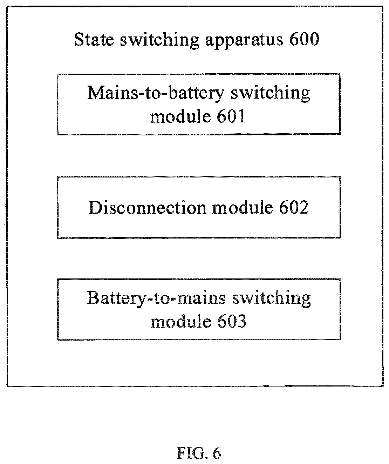

As shown in FIG. 6, according to another aspect of the disclosure, a state switching apparatus for a line-interactive UPS 600 is provided, including: a mains-to-battery switching module 601, a disconnection module 602, and a battery-to-mains switching module 603. The mains-to-battery switching module 601 is configured to, when the UPS needs to switch from the first mode to the second mode, operate the first switch to switch from the current first mode to the battery mode, and maintain the connected state of the first voltage regulation circuit in the switching process. The disconnection module 602 is configured to, after entering the battery mode, turn off the second switch to cause the first voltage regulation circuit disconnected from the UPS, and then turn on the third switch to cause the second voltage regulation circuit connected to the UPS. The battery-to-mains switching module 603 is configured to operate the first switch to cause the UPS switched from the battery mode to the second mode.

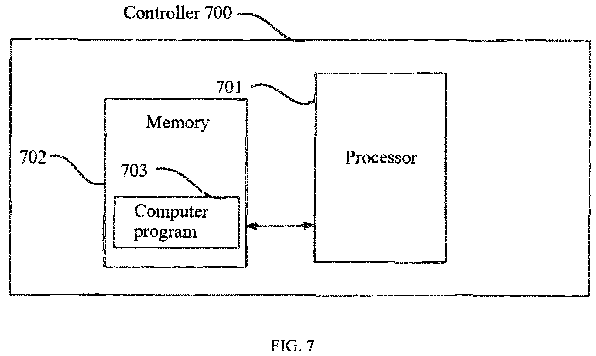

FIG. 7 is a schematic block diagram of a controller provided in an embodiment of the disclosure. As shown in FIG. 7, the controller 700 in this embodiment includes one or more processors 701, a memory 702, and a computer program 703 stored in the memory 702 and executable on the processor 701. The processor 701 executes the computer program 703 to implement the steps in the above embodiments of the state switching method, such as S201 to S203 shown in FIG. 2 or S301 to S303 shown in FIG. 3, or the processor 701 executes the computer program 703 to implement the functions of the modules/units in the above embodiments of the state switching apparatus, such as the functions of modules 601 to 603 shown in FIG. 6.

For example, the computer program 703 may be divided into one or more modules/units, and the one or more modules/units are stored in the memory 702 and executed by the processor 701 to complete the present invention. The one or more modules/units may be a series of computer program instruction segments capable of completing specific functions, and the instruction segments are used for describing the execution process of the computer program 703 in the controller 700. For example, the computer program 703 may be divided into a mains-to-battery switching module 601, a disconnection module 602, and a battery-to-mains switching module 603.

The mains-to-battery switching module 601 is configured to, when the UPS needs to switch from the first mode to the second mode, operate the first switch to switch from the current first mode to the battery mode, and maintain the connected state of the first voltage regulation circuit in the switching process.

The disconnection module 602 is configured to, after entering the battery mode, turn off the second switch to cause the first voltage regulation circuit disconnected from the UPS, and then turn on the third switch to cause the second voltage regulation circuit connected to the UPS.

The battery-to-mains switching module 603 is configured to operate the first switch to cause the UPS switched from the battery mode to the second mode.

The other functions of the modules or units may refer to the description in the embodiment shown in FIG. 6, and will not be repeated here.

The controller 700 includes but is not limited to the processor 701 and the memory 702. Those skilled in the art can understand that FIG. 7 is only an example of a controller and does not constitute a limitation on the controller 700. The controller may include more or fewer components than shown in the figure, or combine some components or different components. For example, the controller 700 may further include an input device, an output device, a network access device, a bus, and the like.

The processor 701 may be a central processing unit (Central Processing Unit, CPU), or other general-purpose processors, digital signal processors, application specific integrated circuits (Application Specific Integrated Circuits, ASICs), field programmable gate arrays (Field-Programmable Gate Arrays, FPGAs), or other programmable logic devices, discrete gates or transistor logic devices, discrete hardware components, and the like. The general-purpose processor may be a microprocessor, or the processor may be any conventional processor or the like.

The memory 702 may be an internal storage unit of the controller, such as a hard disk or internal memory of the controller. The memory 702 may alternatively be an external storage device of the controller, such as a plug-in hard disk, a smart media card (Smart Media Card, SMC), a secure digital (Secure Digital, SD) card, or a flash card (Flash Card) equipped on the controller. Further, the memory 702 may include an internal storage unit and an external storage device of the controller. The memory 702 is configured to store the computer program 703 and other programs and data required by the controller. The memory 702 may be further configured to temporarily store data that has been or will be output.

According to another aspect of the disclosure, a line-interactive UPS is further provided, including a mains input module 101, a operation status module 102, a voltage regulation module 103, and an output module 104 connected in sequence, and the controller 700 as described above.

The mains input module 101 is configured to input a mains voltage, which includes a first voltage and a second voltage.

The operation state module 102 includes a first switch 1021, the first switch 1021 is used for setting the operation state of the UPS as a mains mode or a battery mode, and the mains mode includes a first mode and a second mode.

The voltage regulation module 103 includes a second switch 1032, a third switch 1033, a first voltage regulation circuit and a second voltage regulation circuit; the second switch 1032 is used for connecting the first voltage regulation circuit to the UPS, the third switch 1033 is used for connecting the second voltage regulation circuit to the UPS, the first voltage regulation circuit is used for regulating the first voltage to a desired voltage in the first mode, and the second voltage regulation circuit is used for regulating the second voltage to the desired voltage in the second mode.

The output module 104 is configured to output the desired voltage.

In some embodiments, the UPS further includes a battery configured to provide the desired voltage for the output module in the battery mode.

In the foregoing embodiments, the descriptions of various embodiments have respective focuses. For a part that is not described or recorded in detail in an embodiment, reference may be made to related descriptions in other embodiments.

Those of ordinary skill in the art can realize that the units and algorithmic steps of each example described in combination with the embodiments disclosed herein may be implemented by electronic hardware, or a combination of computer software and electronic hardware. Whether the functions are performed by hardware or software depends on particular applications and design constraints of the technical solutions. Those skilled in the art may use different methods to implement the described functions for each particular application, but it should not be considered that the implementation goes beyond the scope of the disclosure.

In the embodiments provided by the disclosure, it should be understood that the disclosed controller and method can be implemented in other ways. For example, the controller embodiments described above are only illustrative. For example, the division of modules or units is only a logical functional division. In practical implementation, there may be other division methods. For example, a plurality of units or components may be combined or integrated into another system, or some features may be ignored or not performed. In addition, the displayed or discussed mutual couplings or direct couplings or communication connections may be implemented by some interfaces. The indirect couplings or communication connections between the apparatuses or units may be implemented in electronic, mechanical, or other forms.

The units described as separate parts may or may not be physically separated, and the parts displayed as units may or may not be physical units, may be located in one position, or may be distributed on a plurality of network units. Some or all of the units may be selected based on actual requirements to achieve the objectives of the solutions of the embodiments.

In addition, the functional units in the embodiments of the disclosure may be integrated into one processing unit, or each of the units may exist alone physically, or two or more units may be integrated into one unit. The integrated unit may be implemented in a form of hardware, or may be implemented in a form of a software functional unit.

When the integrated module/unit is implemented in the form of a software functional unit and sold or used as an independent product, the integrated module/unit may be stored in a computer-readable storage medium. Based on this understanding, the disclosure implements all or some of the processes in the above embodiments of the method, and can also be completed by instructing relevant hardware through a computer program. The computer program may be stored in a computer-readable storage medium, and when executed by a processor, the steps of the above embodiments of the method can be implemented. The computer program includes computer program code, and the computer program code may be in a form of source code, object code, or an executable file, or in some intermediate forms, or the like. The computer-readable medium may include any entity or apparatus capable of carrying computer program code, recording medium, USB flash drive, portable hard disk, magnetic disk, optical disk, computer storage, read-only memory (Read-Only Memory, ROM), random access memory (Random Access Memory, RAM), electric carrier signals, telecommunications signals, software distribution medium, and the like. It should be noted that the content included in the computer-readable medium may be appropriately added or reduced according to the requirements of legislation and patent practice within the jurisdiction. For example, in some jurisdictions, according to legislation and patent practice, the computer-readable medium does not include carrier signals or telecommunications signals.

The above embodiments are only used for illustrating the technical solutions of the disclosure, rather than limiting them. Although the disclosure is described in detail with reference to the foregoing embodiments, those of ordinary skill in the art should understand that they still can make modifications to the technical solutions described in the foregoing embodiments or make equivalent replacements to some technical features therein; and these modifications or replacements do not make the essences of the corresponding technical solutions depart from the spirit and scope of the technical solutions of the embodiments of the disclosure.

Reference numerals:
101 - mains input module;
102 - operation state module;
103 - voltage regulation module;
1 04 - output module;
1021 - first switch;
1032 - second switch;
1033 - third switch.

## Claims

1. A state switching method for a line-interactive UPS, the line-interactive UPS comprising: a mains input module configured to input a mains voltage, which comprises a first voltage and a second voltage; an operation state module comprising a first switch, wherein the first switch is used for setting the operation state of the UPS as a mains mode or a battery mode, and the mains mode comprises a first mode and a second mode; a voltage regulation module comprising a second switch, a third switch, a first voltage regulation circuit, and a second voltage regulation circuit, wherein the second switch is used for connecting the first voltage regulation circuit to the UPS, the third switch is used for connecting the second voltage regulation circuit to the UPS, the first voltage regulation circuit is used for regulating the first voltage to a desired voltage in the first mode, and the second voltage regulation circuit is used for regulating the second voltage to the desired voltage in the second mode; and an output module configured to output the desired voltage, wherein the state switching method comprises:
when the UPS needs to switch from the first mode to the second mode, operating the first switch to switch from the current first mode to the battery mode, and maintaining the connected state of the first voltage regulation circuit in the switching process;
after entering the battery mode, turning off the second switch to cause the first voltage regulation circuit disconnected from the UPS, and then turning on the third switch to cause the second voltage regulation circuit connected to the UPS; and
operating the first switch to cause the UPS switched from the battery mode to the second mode.

2. The method according to claim 1, wherein before operating the first switch to cause the UPS switched from the battery mode to the second mode, the method further comprises: performing a phase lock operation on the UPS.

3. The method according to claim 2, wherein the operating the first switch to cause the UPS switched from the battery mode to the second mode comprises:
determining whether the UPS has completed phase lock:
if the phase lock has been completed, operating the first switch to cause the UPS switched from the battery mode to the second mode within 10 milliseconds; or
if the phase lock has not been completed, continuing the phase lock operation.

4. The method according to claim 1, wherein the first switch, the second switch, and the third switch are relays.

5. The method according to claim 4. wherein the relays are electromagnetic relays.

6. The method according to claim 1, wherein the first voltage regulation circuit is composed of a plurality of coils with different turns in an automatic voltage regulation transformer.

7. The method according to claim 1, wherein the second voltage regulation circuit is composed of a plurality of coils with different turns in the automatic voltage regulation transformer.

8. A line-interactive UPS, comprising:
a mains input module configured to input a mains voltage which comprises a first voltage and a second voltage;
an operation state module comprising a first switch, wherein the first switch is used for setting the operation state of the UPS as a mains mode or a battery mode, and the mains mode comprises a first mode and a second mode;
a voltage regulation module comprising a second switch, a third switch, a first voltage regulation circuit, and a second voltage regulation circuit, wherein the second switch is used for connecting the first voltage regulation circuit to the UPS, the third switch is used for connecting the second voltage regulation circuit to the UPS, the first voltage regulation circuit is used for regulating the first voltage to a desired voltage in the first mode, and the second voltage regulation circuit is used for regulating the second voltage to the desired voltage in the second mode;
an output module configured to output the desired voltage; and
a controller configured to implement the steps of the state switching method according to any one of claims 1 to 6 when executing a computer program.

9. The UPS according to claim 8, further comprising a battery configured to provide the desired voltage for the output module in the battery mode.

10. A computer-readable storage medium storing a computer program, wherein the computer program, when executed by a processor, implements the steps of the state switching method according to any one of claims 1-7.
